Europäisches Patentamt

European Patent Office

Office européen des brevets

(19)

(11) Numéro de publication: **0 258 165 B1**

## (12) FASCICULE DE BREVET EUROPEEN

(45) Date de publication de fascicule du brevet: **18.03.92**   (51) Int. Cl.⁵: **A01C 23/00**

(21) Numéro de dépôt: **87460014.1**

(22) Date de dépôt: **28.07.87**

(54) **Dispositif de remplissage et de vidage d'une tonne à lisier ou analogue.**

(30) Priorité: **28.07.86 FR 8610998**

(43) Date de publication de la demande:
**02.03.88 Bulletin   88/09**

(45) Mention de la délivrance du brevet:
**18.03.92 Bulletin   92/12**

(84) Etats contractants désignés:
**BE DE ES FR GB IT LU NL SE**

(56) Documents cités:
**DE-A- 1 457 797**
**DE-A- 3 322 354**
**GB-A- 694 445**

**SOVIET INVENTIONS ILLUSTRATED, Section Général/Mécanique, semaine k07, résumé no. C3244K/07, 30 mars 1983, Derwent Publications Ltd, Londres, GB; & SU-A-917 757 (BLACK EARTH AGRIC) 17-04-1982**

**SOVIET INVENTIONS ILLUSTRATED, Section Général/Mécanique, semaine 8622, résumé no. 86-143056/22, 13 juin 1986, Derwent Publications Ltd, Londres, GB; & SU-A-1 189 375 (ORG FERTILISER MACH) 07-11-1985**

(73) Titulaire: **C.R.M.S.**
**Saint Martin des Besaces Lieu-dit**
**"Cauchard"**
**F-14350 Le Beny-Bocage(FR)**

(72) Inventeur: **Collibault, Joseph René**
**Le Janaet Brie**
**F-35150 Janze(FR)**

(74) Mandataire: **Martin, Jean-Jacques**
**Cabinet REGIMBEAU 11, rue Franz Heller**
**F-35700 Rennes(FR)**

EP 0 258 165 B1

Rank Xerox (UK) Business Services

## Description

La présente invention concerne un dispositif de remplissage et de vidage d'une tonne à lisier ou analogue, c'est-à-dire d'une citerne mobile destinée à recevoir un liquide, une pâte, ou même un matériau en vrac.

Une opération d'épandage de lisier comprend les trois étapes principales suivantes :

a) le remplissage de la tonne par prélèvement dans une fosse à lisier ;

b) le transport de la tonne sur le champ à traiter ;

c) l'épandage proprement dit du lisier sur le champ (vidage de la tonne).

La tonne est un réservoir porté par un châssis mobile qui est généralement tiré par un tracteur.

Pour faciliter cette opération, il a déjà été proposé d'équiper la tonne d'un tuyau mobile qui est fixé à demeure à la tonne, ce tuyau débouchant à la partie supérieure de la tonne. En vue du remplissage, il est possible de déployer le tuyau, en écartant de la tonne son extrémité libre et en plongeant celle-ci dans la fosse à lisier. Après remplissage de la tonne, par pompage ou aspiration, le tuyau est rangé au-dessus ou sur le côté de la tonne, dans une position escamotée ne gênant pas les étapes suivantes et notamment le transport.

L'épandage ultérieur du lisier sur le champ est réalisé au moyen d'un dispositif de distribution qui est situé à l'arrière ou sur le côté de la tonne et qui est entraîné par la prise de force du tracteur. Ce dispositif est tout à fait indépendant et distinct du tuyau de remplissage.

Le brevet français n° 81 18395 et la demande de brevet français n° 86 06013 (déposée le 25 avril 1986 par la demanderesse) concernent notamment des tonnes à lisier de ce type.

Selon la demande n° 86 06013, le tuyau mobile est un tuyau souple qui est soutenu par une armature déformable constituée de plusieurs parties articulées dont les mouvements sont commandés par des vérins.

Dans la réalisation divulguée par le brevet n° 81 18395, le tuyau mobile est porté par un bras articulé équipé d'une turbine broyeuse qui est positionnée à l'extrémité libre du tuyau ; cette turbine est adaptée pour broyer la croûte éventuellement formée sur le lisier de la fosse et pour refouler ce lisier dans le tuyau, en réalisant par conséquent le pompage souhaité.

Cette dernière réalisation présente l'avantage d'être commode d'utilisation, car l'ensemble de l'opération peut être pratiquement pilotée à distance par un opérateur assis sur le tracteur. De plus, par rapport au système de pompage par aspiration, qui nécessite la création d'un vide dans la tonne, et corrélativement impose des parois renforcées, il offre une bonne sécurité d'utilisation pour un prix de revient acceptable.

La présente invention se propose d'améliorer ce dispositif en en abaissant encore le prix de revient. L'invention a pour origine la constatation que la turbine de pompage et le dispositif de distribution et d'épandage ne sont jamais utilisés simultanément. C'est pourquoi la demanderesse a cherché à concevoir un dispositif dans lequel la turbine de pompage utilisée pour le remplissage de la tonne puisse servir également à son vidage et à l'épandage du lisier.

On connaît également, par le document SU - A - 917 757 un épandeur comportant les caractéristiques du préambule des revendications 1 et 6, cet épandeur d'engrais liquide comportant une citerne qui est équipée d'un tuyau mobile portant une pompe. Le tuyau peut être déployé par un manipulateur pour occuper une position basse dans laquelle la pompe plonge dans un resérvoir d'engrais, ce qui permet de remplir la citerne. Le tuyau peut être rangé dans une position de transport et d'épandage dans laquelle il se trouve au-dessus de la citerne, la pompe étant placée sur un conduit de citerne se trouvant à la base de la partie arrière de la citerne. Le tuyau communique ainsi avec l'engrais contenu dans la citerne par l'intermédiaire de la pompe et d'une vanne de fermeture du conduit. Lorsque cette dernière est ouverte, l'épandage peut être réalisé à l'aide de la pompe, via une seconde vanne de distribution qui est portée par le tuyau.

Dans cette réalisation connue on utilise donc la même pompe pour le remplissage et pour le vidage de la citerne.

Il apparaît cependant que cet épandeur n'est par entièrement satisfaisant. Il ressort de l'examen du dessin représentant l'épandeur que l'extrémité du tuyau portant la pompe présente une forme légèrement conique, cette extrémité se mettant en place de haut en bas sur une ouverture formant siège d'appui qui est formée dans le conduit de sortie de la citerne, ouverture qui est dirigée vers le haut. Il s'ensuit qu'en position de transport et d'épandage la pompe va engendrer un flux axial de produits qui est dirigé de bas en haut, c'est-à-dire dans la même direction et en sens inverse que la direction de mise en place de la pompe sur son siège.

Ce flux tend donc en permanence à décoller la pompe de son siège et est par conséquent une source de fuites. De plus les vibrations engendrées par le transport de la citerne, qui ont pour la plupart une composante verticale, tendent également à écarter la pompe de son siège.

Il se pose donc un problème d'étanchéité à ce niveau.

Ce problème est d'autant plus important que ce dispositif est utilisé pour l'épandage de produits peu homogènes, contenant des matières solides (granuleuses et fibreuses) en suspension, comme c'est le cas en particulier du lisier. Ces matières ont tendance à s'insérer facilement entre l'extrémité du tuyau et son siège, à s'y amalgamer, ce qui altère très rapidement l'étanchéité de la liaison.

L'utilisation de moyens de verrouillage additionnels tels que des manettes de blocage de type connu, par exemple à excentrique, adaptés pour appliquer fortement l'extrémité du tuyau contre son siège, n'est pas non plus une solution tout à fait satisfaisante d'une part en raison du surcoût que de tels moyens représentent, d'autre part en raison du supplément de manoeuvres qu'il nécessite de la part de l'utilisateur. En effet, l'un des objectifs principaux de l'invention est de permettre que l'ensemble des opérations puissent être faites commodément, pratiquement pilotées à distance par un opérateur assis sur le tracteur.

C'est pourquoi la présente invention vise à perfectionner le type d'épandeur décrit dans le document SU - A - 917 757, en proposant un dispositif ne présentant pas les inconvénients qui viennent d'être mis en lumière, ce dispositif étant utilisable pour le lisier et d'autres produits peu homogènes, de manière aisée et sûre.

Ces résultats sont atteints conformément à l'invention, grâce au fait que les moyens qui réalisent la communication du tuyau avec le lisier contenu dans la tonne, lorsque ce tuyau se trouve en position de transport et d'épandage, sont adaptés pour assurer une communication étanche qui n'est pas - ou pratiquement pas - altérée par la rotation de la turbine ni par les vibrations dues au transport.

Dans un premier mode de réalisation du dispositif selon l'invention, les moyens qui réalisent la communication du tuyau avec le lisier contenu dans la tonne comprennent un boîtier récepteur dans lequel débouche, via une vanne, un conduit de sortie de tonne, d'axe horizontal, situé à la base de la partie arrière de la tonne ; ce boîtier récepteur sert de logement à la turbine lorsque le tuyau occupe la position de transport et d'épandage, et la mise en place de la turbine dans le boîtier se fait par emboîtement suivant une direction qui est sensiblement perpendiculaire à l'axe du conduit de sortie de tonne, c'est-à-dire sensiblement vertical.

Conformément à l'invention, les faces intérieures du boîtier ont des parties planes qui forment les parois d'un dièdre ouvert vers le haut, tandis que la turbine est pourvue d'éléments d'engagement complémentaires permettant un emboîtement de la turbine de haut en bas, avec effet de coin, dans le boîtier, la surface d'appui de la turbine avec l'extrémité dudit conduit de sortie étant disposée à peu près transversalement par rapport à l'axe (horizontal) de celui-ci.

Ces éléments d'engagement comprennent de préférence des galets aptes à rouler sur l'une des parties planes du boîtier, de manière à diminuer les frottements à ce niveau.

Les deux parties planes constituant les faces intérieures du boîtier peuvent être toutes deux inclinées ; dans une variante l'une des deux faces est sensiblement verticale, l'autre seulement étant inclinée.

Grâce à cette disposition, en raison du caractère auto-bloquant de l'emboîtement de la turbine dans le boîtier, et du fait que cet emboîtement se fait transversalement par rapport au flux de lisier quittant la tonne, la qualité de la communication du conduit de sortie de tonne avec le tuyau n'est pratiquement pas altérée par le fonctionnement de la turbine, ni par les vibrations dues au transport.

La turbine utilisée dans ce mode de réalisation est avantageusement une turbine centrifuge à ailettes, dont l'axe de rotation est perpendiculaire à la direction d'emboîtement de la turbine, c'est-à-dire horizontal, de sorte que le fonctionnement de la turbine réalise une succion qui tend à améliorer encore la qualité de la liaison d'emboîtement.

Dans un second mode de réalisation possible de l'invention, selon lequel la vanne de distribution est placée sur le tuyau et permet de faire communiquer le refoulement de la turbine avec l'extérieur, les moyens qui permettent de faire communiquer le tuyau avec le lisier contenu dans la tonne consistent en une simple ouverture qui est prévue dans la partie supérieure de la tonne et dont les dimensions sont suffisantes pour autoriser le passage de l'extrémité du tuyau et de la turbine, de sorte qu'en position de transport et d'épandage, la turbine se trouve plongée à l'intérieur de la tonne, dans le lisier qui y est contenu, tandis que la vanne de distribution reste située à l'extérieur de la tonne.

Dans ce mode de réalisation on a donc en permanence une communication parfaitement assurée, sans risque de fuites, entre l'extrémité du tuyau et le lisier contenu dans la tonne.

L'ouverture ménagée dans la partie supérieure de la tonne est avantageusement munie d'un rebord d'entrée tronconique qui sert d'appui à une collerette entourant le tuyau lorsque la turbine se trouve à l'intérieur de la tonne ; le tuyau se trouve par conséquent suspendu, par la collerette, à l'intérieur de la tonne, dans une direction sensiblement verticale.

De manière à permettre un vidage complet de la tonne il est avantageux de prévoir dans le fond de celle-ci, juste à l'aplomb du tuyau et de la turbine, une cuvette adaptée pour recevoir le reste du lisier lorsque la tonne a été vidée ; la longueur de la partie suspendue du tuyau à l'intérieur de la tonne est déterminée de telle manière que la turbine se trouve juste au niveau du fond de la tonne, au-dessus de la cuvette.

Dans ce mode de réalisation, la vanne de distribution est portée par le tuyau et se trouve naturellement en position de transport et d'épandage située au-dessus de l'ouverture ménagée dans la partie supérieure de la cuve ; il est avantageusement associé à cette vanne de distribution une jupe déflectrice qui est adaptée pour diriger le lisier vers le sol durant l'épandage.

D'autres particularités et avantages de l'invention apparaîtront de la description et des dessins annexés qui en présentent des modes de réalisation préférentiels.

Sur ces dessins :

- la figure 1 est une vue de face d'une tonne à lisier équipée du dispositif de l'invention, faisant l'objet du premier mode de réalisation, le tuyau mobile occupant la position de transport ;
- la figure 2 est une vue de côté de la tonne de la figure 1, le tuyau se trouvant en position de remplissage ;
- la figure 3 est une vue de face à plus grande échelle montrant en détail et en coupe la structure de la turbine et de son boîtier récepteur ;
- la figure 4 est une vue de côté partiellement coupée de la turbine de la figure 3 ;
- la figure 5 est une vue partielle de face et en coupe d'une variante du dispositif de la figure 3 ;
- les figures 6 et 7 sont des schémas de principe montrant le trajet du lisier dans la tonne des figures 1 et 2, respectivement lorsque la vanne de distribution est fermée (transport) et lorsqu'elle est ouverte (épandage) ;
- la figure 8 est un schéma montrant un second mode de réalisation du dispositif de l'invention ;
- la figure 8a est un détail de la figure 8 dans lequel la vanne de distribution est fermée.
- la figure 9 est une vue partielle en coupe qui représente, à plus grande échelle, le dispositif des figures 8 et 8a.

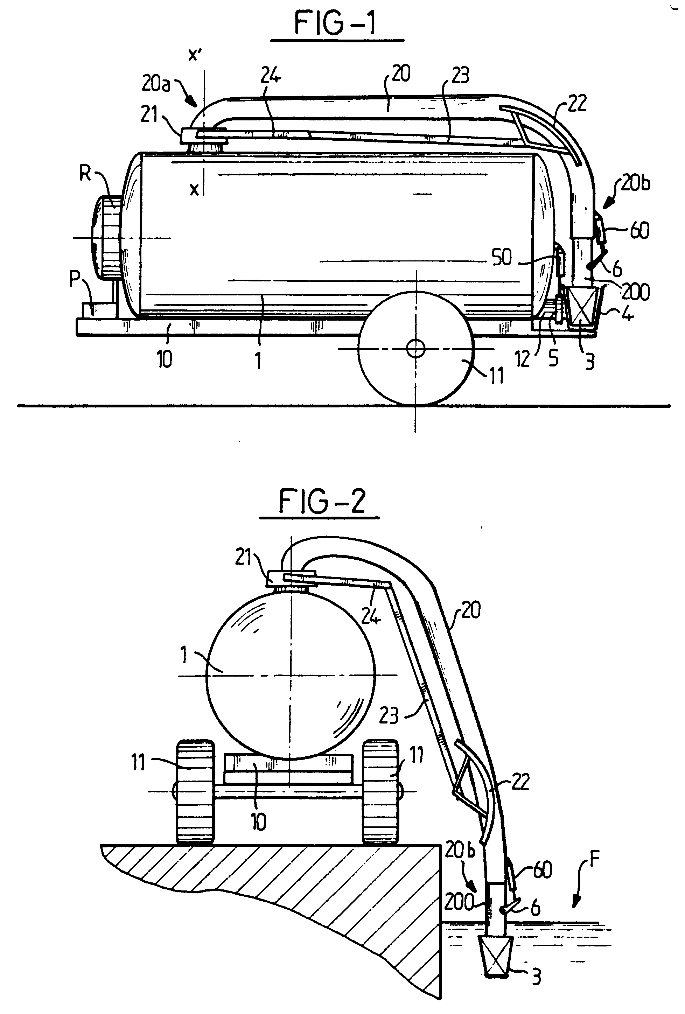

La tonne à lisier des figures 1 et 2 est une citerne horizontale cylindrique 1 supportée par un châssis 10 monté sur une paire de roues 11 ; il s'agit d'une tonne de conception tout à fait traditionnelle.

La partie avant de la tonne, à laquelle est accroché le tracteur (non représenté), est située sur la gauche de la figure 1.

A la partie avant de la tonne est prévue une pompe hydraulique P reliée à un resérvoir R de fluide hydraulique, la pompe P étant entraînée par la prise de force du tracteur, de manière usuelle.

Le dispositif comprend un tuyau souple 20, par exemple en matière plastique ou en caoutchouc résistant à la corrosion, dont une extrémité 20a est fixée sur une tourelle 21 pouvant tourner autour d'un axe sensiblement vertical XX'. La tourelle 21 est montée à la partie supérieure de la tonne 1, à l'avant de celle-ci.

Le tuyau 20 est supporté par une armature déformable composée de plusieurs parties articulées 24, 23, 22 ; le déplacement de ces différentes parties est commandé à l'aide de vérins appropriés, qui peuvent être commandés à distance (à partir du tracteur) et qui n'ont pas été représentés sur les figures dans un seul but de simplification, car le mode de déploiement et de soutènement du tuyau 20 ne fait pas à proprement parler partie de la présente invention ; l'armature 22, 23, 24 peut être similaire à celle décrite dans la demande de brevet n° 86 06013 précitée, et il convient de s'y reporter au besoin.

L'extrémité libre 20b du tuyau 20 porte un manchon 200 à l'extrémité duquel est montée une turbine représentée schématiquement sur les figures 1 et 2 et désignée par la référence 3 ; il s'agit d'une turbine de pompage, de préférence broyeuse, de type connu, apte à pomper un fluide dans lequel il est plongé et à refouler celui-ci dans le tuyau 20.

Sur le manchon 200 est montée une vanne 6 commandée par un vérin hydraulique 60 également porté par le tuyau.

A la base de l'extrémité arrière de la tonne 1 se trouve un conduit de sortie 12, d'axe horizontal W - W', sur lequel est montée une vanne 5, de type connu, dont l'obturation et l'ouverture sont commandées par un vérin hydraulique 50.

Les vérins 60 et 50 sont commandés à distance, de préférence à partir du tracteur, par des connections hydrauliques qui n'ont pas été représentées dans un but de simplification ; d'autre part, la turbine 3 possède un moteur hydraulique qui est entraîné par la pompe hydraulique P, par l'intermédiaire de canalisations appropriées non représentées, celles-ci étant de préférence disposées le long du tuyau 20.

La vanne 5 équipant le conduit de sortie 12 de la tonne débouche dans un boîtier 4 qui est fixé à la partie arrière du châssis 10, ce boîtier présentant une ouverture dirigée vers le haut et de forme adaptée pour servir de logement à la turbine 3.

Comme on le voit à la figure 1, lorsque le tuyau 20 se trouve en position escamotée, rangé à proximité de la tonne 1, la turbine 3 est emboîtée dans le boîtier 4 ; au contraire, à la figure 2, le tuyau 20 se trouve en position déployée, la turbine 3 étant plongée dans une fosse à lisier F.

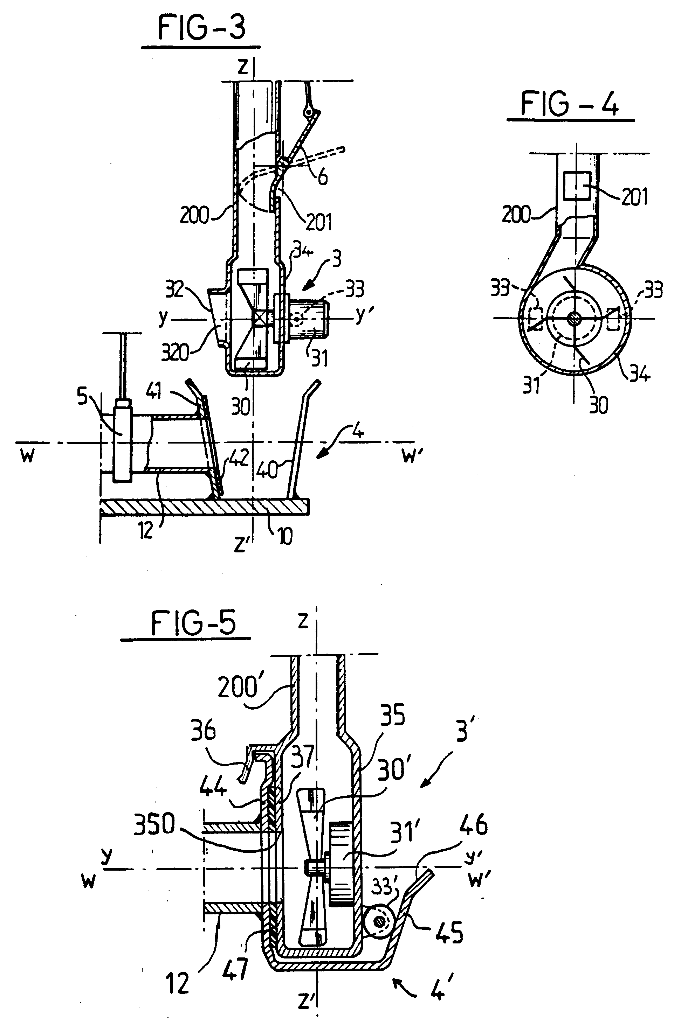

La figure 3 représente en détail la vanne 6, qui a la forme d'un volet articulé sur le manchon 200 ;

ce volet peut sélectivement soit obturer un orifice de sortie 201 dirigé vers l'arrière, soit dégager cet orifice en obturant la partie du manchon 200 située au-dessus du niveau de cet orifice.

Comme on le voit sur cette même figure 3, la turbine représentée est une turbine centrifuge à palettes 30, entraînée par un moteur hydraulique 31, dont l'axe de rotation YY' est dirigé perpendiculairement par rapport à l'axe du manchon 200, c'est-à-dire horizontalement. L'axe vertical du manchon est référencé ZZ'.

La turbine est logée dans un carter 34 qui présente une ouverture 320 d'entrée du lisier dirigée vers l'avant ; cette ouverture présente une face inclinée 32 ; à l'arrière du carter 34, est disposée une paire de galets anti-friction 33.

Le boîtier 4 comprend deux parties planes - ou parois - inclinées 40, 41, qui forment un dièdre de faible valeur d'angle, dont l'ouverture est dirigée vers le haut. L'un des pans inclinés 41 est revêtu d'une garniture d'étanchéité 42 en matériau souple et élastique.

Comme on le comprend aisément en observant la figure 3, la fixation de la turbine 3 à l'intérieur du boîtier 4 se fait très simplement de haut en bas, la face inclinée 32 venant s'appliquer intimement contre la garniture 42, tandis que les galets anti-friction 33 viennent s'appliquer contre les pans inclinés arrière 40. Après emboîtement, les axes W - W' et Y - Y' sont confondus et on obtient une communication étanche entre le conduit 12 et l'ouverture 320. Le flux de lisier aspiré par la turbine suivant l'axe WW' n'altère pratiquement pas la qualité de la liaison puisque l'axe ZZ' de dégagement du boîtier est un axe perpendiculaire. De même les vibrations dues au transport sont sans influence sur cette liaison ; par effet de coin, le poids de la turbine assure un auto-blocage de l'ensemble. Il est naturellement possible de prévoir des moyens de verrouillage additionnels destinés à améliorer encore ce blocage si on le souhaite, mais ceux-ci ne sont pas indispensables.

Le dispositif qui vient d'être décrit est utilisé de la manière suivante :

Pour procéder au remplissage de la tonne, on approche celle-ci de la fosse F où se trouve le lisier à prélever ; par commande de l'armature 24, 23, 22 on fait sortir la turbine 3 de son logement 4 et on provoque le déploiement du tuyau 20 de manière à faire plonger l'extrémité libre de ce tuyau - y compris la turbine - dans le lisier.

On met alors en marche la turbine, et celle-ci refoule le lisier dans la tonne via le tuyau 20 ; durant cette opération, les vannes 5 et 6 sont naturellement en position fermée.

Lorsque la tonne est suffisamment remplie, on provoque l'escamotage du tuyau 20 et on place la turbine 3 dans son logement 4, l'ensemble venant occuper la position de la figure 1.

On notera que dans cette position, il est possible de réaliser un brassage et un malaxage du lisier contenu dans la tonne, ce qui permet d'obtenir une homogénéisation du produit même en cas de stockage prolongé.

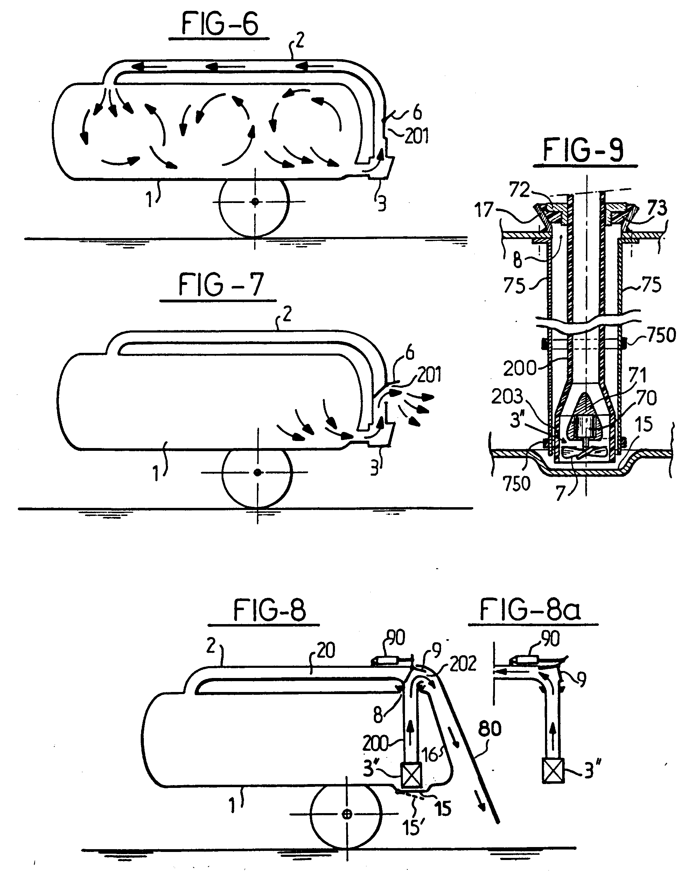

A cet effet, il suffit d'ouvrir la vanne 5 en maintenant la vanne 6 fermée, et de mettre en marche la turbine 3, pour provoquer un brassage du lisier, celui-ci étant prélevé à la partie inférieure arrière de la tonne pour être réintroduit à la partie supérieure avant de celle-ci, après avoir parcouru le tuyau 20 ; le produit est donc déplacé en circuit fermé, ce qui provoque le brassage souhaité qui est figuré par des flèches à la figure 6.

Lorsqu'on souhaite épandre le lisier, on ouvre la vanne 5 et on ferme la vanne 6, de sorte que le lisier prélevé est forcé de s'échapper par l'orifice 201 et s'épand sur le sol (figure 7).

On notera qu'il est possible de régler le débit d'épandage en fermant plus ou moins la vanne 6, une partie seulement du lisier pompé par la turbine dans le manchon 200 étant évacué alors par l'orifice 201, tandis que le reste est ramené dans la tonne par le tuyau 20.

Grâce à l'effet de coin et d'autoblocage susmentionnés, la simple mise en place (qui peut être pilotée à distance) de haut en bas de la turbine 3 dans le boîtier 4 assure une liaison parfaitement étanche et sûre du tuyau 20 avec le lisier contenu dans la tonne. Inversement, cette liaison peut être très facilement rompue par simple retrait de bas en haut de la turbine hors du boîtier.

La variante de la figure 5 se distingue du dispositif des figures 3 et 4 essentiellement par le fait que l'une seulement 45 des parties planes (ou parois) servant à l'emboîtement de la turbine 3' est inclinée, l'autre 44 étant verticale. Cette dernière est revêtue d'une garniture souple et élastique 47 formant joint d'étanchéité, qui entoure l'orifice de sortie du conduit 12.

Le boîtier a donc l'allure générale d'un demi-dièdre ouvert vers le haut.

La turbine 3' est une turbine centrifuge à ailettes 30' entraînée par un moteur hydraulique 31', turbine et moteur étant logés dans un carter 35. Ce dernier possède une face avant 37 plane et verticale adaptée pour s'appliquer contre la paroi verticale 44 du carter par l'intermédiaire du joint 47 ; il présente une ouverture 350 pouvant venir en correspondance avec l'orifice de sortie du conduit 12.

La face arrière du carter 35 est munie de galets de roulement 33' adaptés pour rouler sur la paroi inclinée 45 lors de la mise en place, de haut en bas du carter dans le boîtier 4'. Au cours de cette mise en place, la face avant 37 du carter vient s'appliquer intimement, avec autoblocage, contre le joint d'étanchéité 47.

La paroi 45 présente avantageusement un chanfrein d'entrée 46 facilitant le positionnement du carter en face du boîtier récepteur au début de la mise en place ; une patte recourbée 36 solidaire du carter est également prévue pour s'accrocher à la partie supérieure de la paroi 44 du boîtier au début de la mise en place afin de faciliter cette opération.

Après emboîtement, les axes horizontaux W - W′ du conduit de sortie 12 et Y - Y′ de la turbine sont confondus, perpendiculaires à l'axe vertical Z - Z′ du manchon 200′.

Comme dans le cas précédemment décrit on obtient donc une liaison parfaitement étanche, qui ne peut pratiquement pas être rompue de manière inopinée au cours du fonctionnement du dispositif.

Dans le second mode de réalisation qui est représenté aux figures 8, 8a et 9, la turbine 3″ est destinée - en vue du transport et de l'épandage - non pas à être logée dans un boîtier récepteur, mais à être tout simplement introduite (en même temps que l'extrémité de tuyau qui la porte) à l'intérieur même de la tonne, et à être plongée dans le lisier qui s'y trouve.

Cette introduction est possible grâce à la présence d'une ouverture 8 telle qu'une ouverture circulaire ménagée à la partie supérieure de la tonne, par exemple au niveau le plus haut de la paroi cylindrique de la tonne. Cette ouverture possède naturellement un diamètre supérieur à celui de l'extrémité du manchon 200 et de la turbine 3″. Elle est munie d'un rebord tronconique 17, par exemple soudé à sa périphérie.

A l'intérieur de la tonne, sont fixées une série de tiges plates 75 - par exemple au nombre de quatre - dont la disposition correspond au contour de l'ouverture 8. Ces tiges s'étendent verticalement vers le bas à l'intérieur de la tonne, jusqu'au fond de celle-ci et constituent un puits de guidage pour le manchon 200.

Des entretoises appropriées 750, par exemple annulaires, peuvent être prévues pour relier ces tiges les unes aux autres et empêcher leur déformation.

Le manchon 200 présente une extrémité 203 de diamètre élargi, reliée au corps du manchon par un tronçon tronconique. Dans cette partie est montée la turbine 3″ qui est une turbine axiale à hélice 7. Son moteur hydraulique d'entraînement 70 est logé dans une pièce 71 qui est fixée par des moyens appropriés dans l'axe du manchon 200. La pièce 71 a une forme générale conique qui correspond à celle du tronçon de tuyau tronconique à ce niveau. Cette pièce joue le rôle d'un déflecteur répartissant correctement dans le manchon 200 le flux de lisier prélevé et refoulé axialement par la turbine.

A une distance de la turbine 3″ - qui correspond sensiblement à la hauteur de l'espace intérieur de la tonne - le tuyau 20 est muni d'une collerette. Celle-ci comprend une bague métallique, ou frette 72, sur laquelle est fixée une garniture souple et élastique 73 formant joint d'étanchéité, dont la forme tronconique est complémentaire de celle du rebord 17. La collerette sert de bouchon, permettant de fermer hermétiquement la tonne (en position de transport et d'épandage) ; elle sert aussi à soutenir l'extrémité de tuyau qui se trouve dans la tonne.

Au-dessus de la collerette 72 - 73, le tuyau 20 est équipé d'une vanne de distribution 9 constituée de deux volets angulairement décalés et située en vis-à-vis d'un orifice de distribution 202 tourné vers l'arrière. La vanne 9 est commandée par un vérin hydraulique 90.

L'orifice 202 débouche sur une jupe déflectrice 80 fixée à l'arrière de la tonne et s'étendant obliquement vers le bas jusqu'à proximité du sol. Il s'agit d'une plaque de tôle éventuellement cintrée et présentant (vue en bout) une forme générale trapézoïdale, de grande base située en bas.

Au droit du puits formé par les tiges 75, le fond de la tonne présente un renforcement (ou cuvette) 15 avantageusement équipé d'un volet de vidange 15′ (figure 8).

La longueur du manchon 200 est telle que lorsqu'il est enfoncé dans ce puits, et s'y trouve suspendu (par l'appui de la collerette 72 - 73 dans le rebord tronconique 17) l'hélice de turbine 7 se trouve au-dessus de la cuvette 7, juste au niveau du fond de la tonne. Grâce à cet arrangement il est donc possible de vider pratiquement la totalité du lisier contenu dans la tonne à l'aide de la turbine. Le reste peut être prélevé par ouverture du volet 15′.

Ce dispositif est utilisé comme suit :

En position de remplissage, le tuyau 20 est déployé, manchon 200 et turbine 3″ sortis de la tonne.

La turbine 3″ étant plongée dans une fosse à lisier, et la vanne 9 étant fermée, la mise en marche de la turbine permet d'aspirer le lisier dans la tonne.

En position de transport et d'épandage, le manchon 200 et la turbine sont introduits à l'intérieur de la tonne, dans le puits constitué par les tiges 75. L'ouverture de la vanne 9 permet de réaliser l'épandage, le lisier aspiré à la partie inférieure de la tonne étant refoulé par l'orifice 202 et s'écoulant jusqu'au sol le long de la jupe 80 (figure 8).

En position de transport et d'épandage, il est possible d'effectuer un brassage du lisier contenu dans la tonne, en mettant en marche la turbine après avoir fermé la vanne 9. Le lisier circule alors suivant une trajectoire fermée (figure 8a).

Il est clair que dans ce second mode de réalisation, la communication du tuyau avec le lisier est toujours parfaite puisque la turbine trempe à l'intérieur même du lisier. Cette communication n'est aucunement influencée par la rotation de la turbine ni par les vibrations dues aux transports.

Diverses variantes peuvent naturellement être envisagées ; ainsi, par exemple, l'introduction du tuyau à l'intérieur de la tonne pourrait se faire par une ouverture située à la partie supérieure de la face en bout (face arrière) de la tonne et non de sa paroi cylindrique.

**Revendications**

1. Dispositif de remplissage et de vidage d'une tonne à lisier ou analogue, du type comportant un tuyau mobile (20) dont une extrémité (20a) est raccordée à la partie supérieure de la tonne (1), et dont l'autre extrémité (20b) porte une turbine de pompage (3, 3'), ce tuyau pouvant occuper une position dite de remplissage dans laquelle il est écarté de la tonne tandis que la turbine est plongée dans une fosse à lisier ou analogue de manière à pomper le lisier dans la tonne, et une position de transport et d'épandage dans laquelle, le tuyau étant rangé le long de la tonne, il communique par l'intermédiaire de la turbine avec le lisier contenu dans la tonne, la turbine étant alors adaptée pour réaliser l'épandage du lisier en le refoulant vers l'extérieur au travers d'une vanne de distribution (6) placée sur le tuyau (20), ce dispositif étant pourvu en outre d'un boîtier récepteur (4, 4') dans lequel débouche, via une vanne (5), un conduit de sortie de tonne (12), d'axe horizontal (W-W'), situé à la base de la partie arrière de la tonne (1), ce boîtier récepteur (4, 4') servant de logement à la turbine (3, 3') lorsque le tuyau (20) occupe la position de transport et d'épandage, et la mise en place de la turbine (3, 3') dans le boîtier (4, 4') se faisant par emboîtement suivant une direction (Z-Z') sensiblement verticale, caractérisé en ce que les faces intérieures du boîtier (4, 4') ont des parties planes (40-41, 45-44) qui forment les parois d'un dièdre ouvert vers le haut, tandis que la turbine (3) est pourvue d'éléments d'engagement complémentaires (32-33, 37-33') permettant un emboîtement de la turbine (3, 3') de haut en bas, avec effet de coin, dans le boîtier (4, 4'), la surface d'appui (32-41, 37-44) de la turbine (3, 3') avec l'extrémité dudit conduit de sortie (12) étant disposée à peu près transversalement par rapport à l'axe horizontal (W-W') de celui-ci.

2. Dispositif selon la revendication 1, caractérisé en ce que lesdits éléments d'engagement comprennent des galets (33, 33') aptes à rouler sur l'une des parties planes (40, 45) du boîtier (4, 4').

3. Dispositif selon l'une des revendications 1 ou 2, caractérisé en ce que l'une des parties planes (44) du boîtier (4') est sensiblement verticale.

4. Dispositif selon l'une des revendications 1 à 3, caractérisé en ce que l'entrée (320, 350) de la turbine (3, 3') vient s'appliquer contre le boîtier (4, 4'), à la périphérie du conduit de sortie de tonne (12), par l'intermédiaire d'une garniture d'étanchéité (42, 47).

5. Dispositif selon l'une des revendications 1 à 4, caractérisé en ce que la turbine (3, 3') est une turbine centrifuge à ailettes, dont l'axe de rotation YY' est disposé horizontalement.

6. Dispositif de remplissage et de vidage d'une tonne à lisier ou analogue, qui comporte un tuyau mobile (20) dont une extrémité est raccordée à la partie supérieure de la tonne (1), et dont l'autre extrémité porte une turbine de pompage (3"), ce tuyau pouvant occuper une position dite de remplissage dans laquelle il est écarté de la tonne tandis que la turbine est plongée dans une fosse à lisier ou analogue de manière à pomper le lisier dans la tonne, et une position de transport et d'épandage dans laquelle, le tuyau étant rangé le long de la tonne, il communique par l'intermédiaire de la turbine avec le lisier contenu dans la tonne, la turbine étant alors adaptée pour réaliser l'épandage du lisier en le refoulant vers l'extérieur au travers d'une vanne de distribution (9) placée sur le tuyau (20), caractérisé en ce qu'une ouverture (8) est prévue dans la partie supérieure de la tonne (1) qui autorise le passage du tuyau (20) et de la turbine (3"), le tuyau (20) étant conformé de sorte qu'en position de transport et d'épandage, la turbine (3") se trouve plongée à l'intérieur de la tonne, dans le lisier contenu dans celle-ci, tandis que ladite vanne de distribution (9) reste située à l'extérieur de la tonne (1).

7. Dispositif selon la revendication 6, caractérisé en ce que ladite ouverture (8) est munie d'un rebord d'entrée tronconique (17) qui sert d'appui à une collerette (72, 73) entourant le tuyau (2), lorsque la turbine (3") se trouve à l'intérieur de la tonne.

8. Dispositif selon la revendication 6 ou 7, caractérisé en ce que, dans la position de transport et d'épandage, la turbine (3'') se trouve juste au niveau du fond de la tonne, à l'aplomb d'une cuvette (15) prévue dans ce fond.

9. Dispositif selon l'une des revendications 9 à 11, caractérisé en ce qu'en position de transport et d'épandage, ladite vanne de distribution (9) est située au-dessus de l'ouverture (8) cette vanne débouchant sur une jupe déflectrice (80) adaptée pour diriger le lisier vers le sol.

## Claims

1. Apparatus for filling and emptying a liquid manure tank or the like, of the type having a movable pipe (20) whereof one end (20a) is connected to the upper part of the tank (1), and whereof the other end (20b) carries a pumping turbine (3, 3'), it being possible for this pipe to adopt a so-called filling position in which it is moved away from the tank while the turbine is immersed in a liquid-manure ditch or the like so as to pump the liquid manure into the tank, and a transporting and application position in which, the pipe being disposed along the tank, it communicates by way of the turbine with the liquid manure within the tank, the turbine then being adapted to carry out the application of the liquid manure by pushing it back outwards through a distribution valve (6) positioned on the pipe (20), this apparatus being furthermore provided with a receiving casing (4, 4') into which there opens out, via a valve (5), an outlet duct of the tank (12), having a horizontal axis (W-W'), located at the base of the rear part of the tank (1), this receiving casing (4, 4') serving to accommodate the turbine (3, 3') when the pipe (20) adopts the transporting and application position, and positioning of the turbine (3, 3') in the casing (4, 4') being effected by fitting in a substantially vertical direction (Z-Z'), characterized in that the inner faces of the casing (4, 4') have plane parts (40-41, 45-44), which form the walls of a dihedron open towards the top, while the turbine (3) is provided with complementary engagement elements (32-33, 37-33') allowing the turbine (3, 3') to be fitted downwards, with a wedge effect, into the casing (4, 4'), the bearing surface (32-41, 37-44) of the turbine (3, 3') with the end of the said outlet duct (12) being arranged approximately transversely with respect to the horizontal axis (W-W') of the latter.

2. Apparatus according to Claim 1, characterized in that the said engagement elements comprise rollers (33, 33') suitable for rolling on one of the plane parts (40, 45) of the casing (4, 4').

3. Apparatus according to either of Claims 1 or 2, characterized in that one of the plane parts (44) of the casing (4') is substantially vertical.

4. Apparatus according to one of Claims 1 to 3, characterized in that the inlet (320, 350) of the turbine (3, 3') comes to bear against the casing (4, 4'), at the periphery of the outlet duct of the tank (12), by way of a gasket (42, 47).

5. Apparatus according to one of Claims 1 to 4, characterized in that the turbine (3, 3') is a centrifugal vane-type turbine whereof the axis of rotation YY' is arranged horizontally.

6. Apparatus for filling and emptying a liquid-manure tank or the like, which has a movable pipe (20) whereof one end is connected to the upper end of the tank (1) and whereof the other end carries a pumping turbine (3"), it being possible for this pipe to adopt a so-called filling position in which it is moved away from the tank while the turbine is immersed in a liquid-manure ditch or the like so as to pump the liquid manure into the tank, and a transporting and application position in which, the pipe being arranged along the tank, it communicates by way of the turbine with the liquid manure within the tank, the turbine then being adapted to carry out the application of the liquid manure by pushing it back outwards through a distribution valve (9) positioned on the pipe (20), characterized in that an opening (8) is provided in the upper part of the tank (1) allowing the pipe (20) and the turbine (3") to pass, the pipe (20) being formed such that in the transporting and application position the turbine (3") is immersed inside the tank, into the liquid manure within it, while the said distribution valve (9) remains located outside the tank (1).

7. Apparatus according to Claim 6, characterized in that the said opening (8) is equipped with a frustoconical inlet rim (17) which serves to support a flange (72, 73) surrounding the pipe (2) when the turbine (3") is inside the tank.

8. Apparatus according to Claim 6 or 7, characterized in that, in the transporting and application position, the turbine (3") is located just at the level of the bottom of the tank, perpendicular to a pan (15) provided in this bottom.

9. Apparatus according to one of Claims 9 to 11, characterized in that, in the transporting and application position, the said distribution valve (9) is located above the opening (8), this valve opening onto a deflecting skirt (80) adapted to direct the liquid manure towards the ground.

**Patentansprüche**

1. Vorrichtung zum Befüllen und Entleeren eines Gülletanks oder dergleichen, enthaltend ein bewegliches Rohr (20), dessen eines Ende (20a) mit dem oberen Abschnitt des Tanks (1) verbunden ist und dessen anderes Ende (20b) eine Pumpturbine (3,3') trägt, welches Rohr eine Füllstellung einnehmen kann, in der es von dem Tank wegsteht, während die Turbine in eine Güllegrube oder dergleichen eingetaucht ist, um die Gülle in den Tank zu pumpen, und eine Transport- und Verrieselungsstellung einnehmen kann, in der das Rohr längs des Tanks angeordnet ist und mittels der Turbine mit der im Tank enthaltenen Gülle in Verbindung steht, wobei die Turbine dann dazu eingerichtet ist, das Verrieseln der Gülle auszuführen, indem sie diese durch ein auf dem Rohr (20) angeordnetes Abgabeventil (6) hindurch nach außen drückt, wobei die Vorrichtung weiterhin mit einem Aufnahmebehälter (4,4') versehen ist, in den über ein Ventil (5) eine Tankauslaßleitung (12) horizontaler Achse (W-W') mündet, die an der Basis des hinteren Abschnitts des Tanks (1) angeordnet ist, wobei dieser Aufnahmebehälter (4,4') der Aufnahme der Turbine (3,3') dient, wenn das Rohr (20) die Transport- und Verrieselungsstellung einnimmt, und die Aufnahme der Turbine (3,3') in dem Behälter (4,4') sich in einer im wesentlichen vertikalen Richtung (Z-Z') vollzieht, dadurch gekennzeichnet, daß die Innenflächen des Behälters (4,4') ebene Abschnitte (40-41, 45-44) aufweisen, die die Seiten eines nach oben offenen Dieders bilden, während die Turbine (3) mit komplementären Anlageelementen (32-33, 37-33') versehen ist, die ein Einführen der Turbine (3,3') von oben nach unten in den Behälter (4,4') mit Keilwirkung erlauben, wobei die Anschlußfläche (32-41, 37-44) der Turbine (3,3') am Ende der Auslaßleitung (12) ungefähr quer zur horizontalen Achse (W-W') derselben liegt.

2. Vorrichtung nach Anspruch 1, dadurch gekennzeichnet, daß die Anlageelemente Rollen (33,33') aufweisen, die zum Abrollen auf einem der ebenen Abschnitte (40,45) des Behälters (4,4') bestimmt sind.

3. Vorrichtung nach einem der Ansprüche 1 oder 2, dadurch gekennzeichnet, daß die ebenen Abschnitte (44) des Behälters (4') im wesentlichen vertikal sind.

4. Vorrichtung nach einem der Ansprüche 1 bis 3, dadurch gekennzeichnet, daß der Eingang (320,350) der Turbine (3,3') sich an den Behälter (4,4') am Umfang der Auslaßleitung des Tanks (12) mittels einer Dichtungsanordnung (42,47) anlegt.

5. Vorrichtung nach einem der Ansprüche 1 bis 4, dadurch gekennzeichnet, daß die Turbine (3,3') eine Zentrifugal-Flügelturbine ist, deren Drehachse (Y,Y') horizontal angeordnet ist.

6. Vorrichtung zum Füllen und Entleeren eines Gülletanks oder dergleichen, enthaltend ein bewegliches Rohr (20), dessen eines Ende mit dem oberen Abschnitt des Tanks (1) verbunden ist und dessen anderes Ende eine Pumpturbine (3'') trägt, welches Rohr eine Füllstellung einnehmen kann, in der es von dem Tank wegsteht, während die Turbine in eine Güllegrube oder dergleichen eingetaucht ist, um die Gülle in den Tank zu pumpen, und eine Transport- und Verrieselungsstellung einnehmen kann, in der das Rohr längs des Tanks angeordnet ist und mittels der Turbine mit der in dem Tank enthaltenen Gülle in Verbindung steht, wobei die Turbine dann dazu eingerichtet ist, das Verrieseln der Gülle auszuführen, indem sie ein auf dem Rohr (20) angeordnetes Abgabeventil nach außen drückt, dadurch gekennzeichnet, daß eine Öffung (8) im oberen Abschnitt des Tanks (1) angeordnet ist, die den Durchgang des Rohrs (20) und der Turbine (3'') erlaubt, wobei das Rohr (20) derart gestaltet ist, daß in der Transport- und Verrieselungsstellung die Turbine (3'') sich in das Innere des Tanks in die darin enthaltene Gülle eingetaucht befindet, während das genannte Abgabeventil (9) außerhalb des Tanks (1) verbleibt.

7. Vorrichtung nach Anspruch 6, dadurch gekennzeichnet, daß die genannte Öffnung (8) mit einem kegeligen Eintrittsrand (17) versehen ist, der als Anlage für einen Kragen (72,73) dient, der das Rohr (2) umgibt, wenn die Turbine (3'') sich im Inneren des Tanks befindet.

8. Vorrichtung nach Anspruch 6 oder 7, dadurch gekennzeichnet, daß in der Transport- und Verrieselungsstellung die Turbine (3'') sich genau in Höhe des Bodens senkrecht in einer in dem Boden ausgebildeten Wanne (15) befindet.

9. Vorrichtung nach einem der Anspürche 9 bis 11, dadurch gekennzeichnet, daß in der Transport- und Verrieselungsstellung das Abgabeventil (9) sich oberhalb der Öffnung (8) befindet und in eine Umlenkschürze (80) mündet, die dazu dient, die Gülle gegen den Boden zu lenken.

## FIG-1

## FIG-2

## FIG-3

## FIG-4

## FIG-5

## FIG-6

## FIG-7

## FIG-9

## FIG-8

## FIG-8a